# EUROPEAN PATENT APPLICATION

(11) **EP 1 521 432 A1**
(43) Date of publication of application: **06.04.2005**
(21) Application number: 04016350.3
(22) Date of filing: 12.07.2004
(51) Int. Cl.: H04M 1/2745

(54) **Mobile communication terminal and method for searching and prefixing of a country code**

(30) Priority: 30.09.2003 KR 2003070432
(71) Applicant: Samsung Electronics Co., Ltd., Suwon-si, Gyeonggi-do 442-742 (KR)
(72) Inventor: Suh, Jung-Woo Samsung Electronics Co., Ltd., Suwon-si Gyeonggi-do (KR); Lee, Kyung-Sup Samsung Electronics Co., Ltd., Suwon-si Gyeonggi-do (KR); Ryu, Jang-Young Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

A mobile communication terminal (100) including a country code storing section (70) for storing country codes and area codes for every country and international access codes. A control section (10) displays the country codes, area codes, and international access codes stored in the country code storing section (70) when a user enters a command for searching for a country code, generates a telephone number input window for inputting and sequentially displaying an international access code, a country code, and an area code, as selected by the user. The user then inputs a telephone number.

## Description

The present invention relates generally to a mobile communication terminal, and more particularly to a mobile communication terminal capable of searching for country codes.

Generally, a mobile communication terminal includes a phone book that stores one or more telephone numbers and related information. If a user wishes to make a call to a telephone number stored in the phone book of the mobile communication terminal, the user can search the phone book and easily dial the desired telephone number by pressing a single key, for example, a send key.

However, the user cannot place a call from one country to another or from one city/area to another within the same country, without dialing a country code or an area code for the country or the area being called before the destination telephone number.

As a result, it is inconvenient for the user of the mobile terminal to determine and dial a corresponding country code or area code when making an international or national long-distance call. More specifically, , in a place where information about country codes or area codes is not readily available, the user will face a greater difficulty and inconvenience in calling a foreign country or other area.

Accordingly, the present invention has been designed to solve the above-mentioned problems occurring in the prior art.

It is the object of the present invention to provide a mobile communication terminal and a method for easily inputting a country code or an area code when calling to a foreign country or other area.

This object is solved by the subject matter of the independent claims.

Preferred embodiments are defined in the dependent claims.

In order to achieve the above, there is provided a mobile communication terminal comprising: a country code storing section for storing country codes and area codes for every country and international access codes; and a control section for displaying the country codes, area codes, and international access codes stored in the country code storing section when a user selects a menu for searching for a country code, generating a telephone number input window for inputting and sequentially displaying an international access code, a country code, and an area code as selected by the user, and waiting for the input of a telephone number.

The above features and advantages of the present invention will be more apparent from the following detailed description taken in conjunction with the accompanying drawings, in which:
FIG. 1 is a block diagram of a mobile communication terminal according to the present invention;
FIG. 2 is a flow chart illustrating a method of searching for a country code in a mobile communication terminal according to a preferred embodiment of the present invention;
Figs. 3A to 3D illustrate pictures displayed during a country code searching process according to the present invention;
FIG. 4A illustrates a sample display of the names of international telephone service providers and corresponding international access codes according to the present invention; and
FIG. 4B illustrates a picture displayed upon completion of the country code search according to the present invention.

Hereinafter, a preferred embodiment of the present invention will be described with reference to the accompanying drawings. In the following description of the present invention, a detailed description of known functions and configurations incorporated herein will be omitted when it may make the subject matter of the present invention rather unclear.

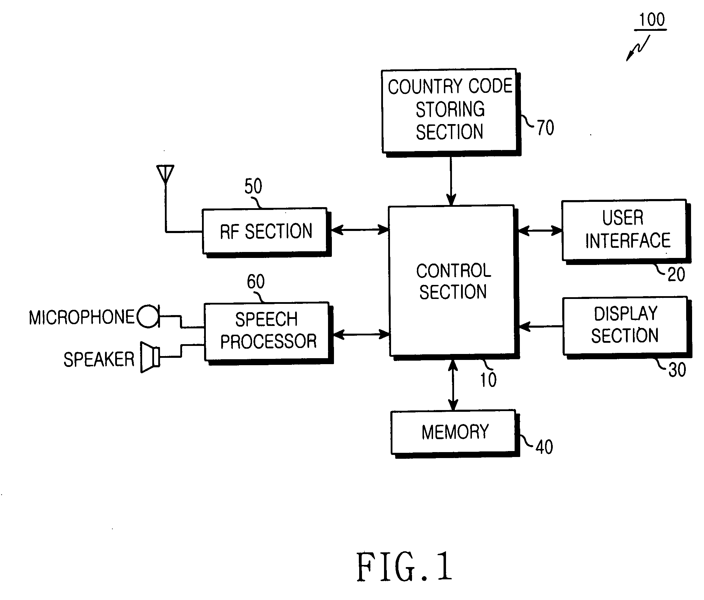

FIG. 1 is a block diagram of a mobile communication terminal according to the present invention. Referring to FIG. 1, the mobile communication terminal includes a control section 10, a user interface 20, a display section 30, a memory 40, an RF section 50, and a speech processor 60. According to the present invention, the mobile communication terminal additionally includes a country code storing section 70. The country code storing section 70 stores country codes and area codes for every country. The country code storing section 70 also stores international access codes, which are needed to access international telephone services. The present invention enables a user to input country codes and area codes for certain countries and edit the input codes. The user can download data including country codes and area codes to the mobile communication terminal through a mobile communication network in order to update the country code storing section 70.

The control section 10 controls the overall operations of the mobile communication terminal. When the user enters a command for displaying country codes, the control section 10 reads out all the country names and country codes stored in the country code storing section 70 and displays them on the display section 30. When the user selects a country code, the control section 10 reads out from the country code storing section 70 the names of cities in the selected country and corresponding area codes, and displays them on the display section 30. When the user subsequently selects an area code, the control section 10 displays the names of international telephone service providers and corresponding international access codes.

Upon selection of an international access code, the control section 10 sequentially displays the selected international access code, country code, and area code in sequence in a telephone number input window and waits for the input of a telephone number.

Although not illustrated in FIG. 1, the memory 40 comprises a ROM (read only memory) and a RAM (random access memory) for storing a plurality of programs and data for controlling operations of the mobile communication terminal, and a speech memory. The memory 40 stores a program for performing a country code search according to the present invention and data generated during the implementation of the program. Although the country code storing section 70 and the memory 40 are provided as separate elements in the preferred embodiment of the present invention, it is obvious to a person skilled in the art that the country code storing section 70 can be included in the memory 40.

The user interface 20 comprises a plurality of number keys and function keys. The user interface 20 outputs data corresponding to a key pressed by the user to the control section 10. The user interface 20 can be a general key matrix or a touch screen. When the user interface 20 is a touch screen, it is possible to select and input a number key, a function key or an arrow displayed on the touch screen using an input means, such as a stylus pen.

The display section 30 displays various messages under the control of the control section 10. The display section 30 may comprise an LCD (liquid crystal display), a TFT (thin film transistor), and an organic electroluminescence.

The RF section 50 controls speech and character data transmission under the control of the control section 10, and the speech processor 60 converts speech data received by the RF section 50 into an audible sound and outputs the sound through a speaker. Also, the speech processor 60 converts speech received through a microphone into an electric signal and outputs the signal to the control section 10.

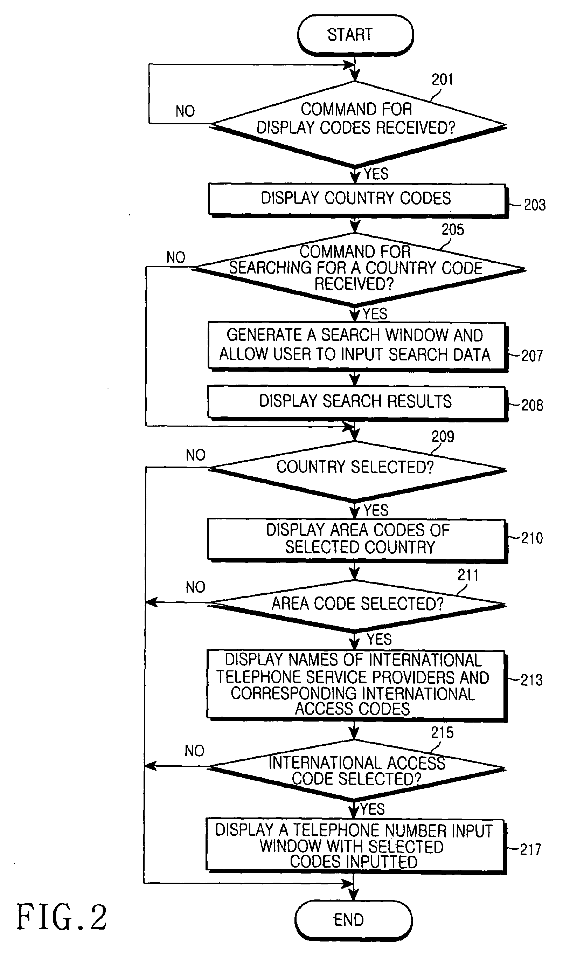

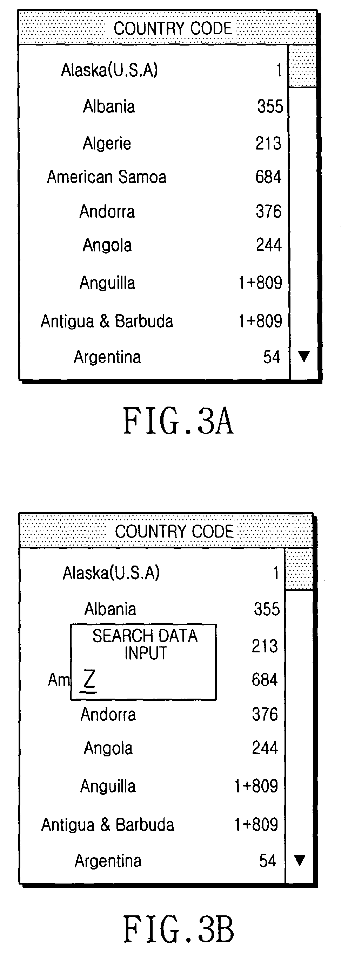

FIG. 2 is a flow chart illustrating a process of searching for a country code in a mobile communication terminal according to the preferred embodiment of the present invention. FIGs. 3A to 3D illustrate pictures displayed during a country code searching process according to the present invention.

Referring to FIGs. 1 to 3, the control section 10 determines whether the user has entered a command for displaying country codes at step 201. If the command has been received, the control section 10 will display the country codes stored in the country code storing section 70 on the display section 30 at step 203.

FIG. 3A illustrates a list of the country codes displayed on the display section 30. As illustrated in FIG. 3A, the country codes are displayed together with the corresponding country names stored in the country code storing section 70.

At step 205, the control section 10 determines whether the user has entered a command for searching for a country code. When the command for displaying a country doe is received, the control section 10 displays a country code search window and enables the user to input any search data in the window at step 207. In other words, if the user presses a predetermined menu key for searching for a country code while a list of the country codes are displayed, the control section 10 generates a country code search window, enabling the user to input one or more alphabetic characters for identifying a country name in the window.

FIG. 3B illustrates the country code search window generated during the display of the country codes. In the example illustrated in FIG. 3B, an alphabetic character "Z" is input as search data in the country code search window. When any search data is input, the control section 10 detects country codes corresponding to the search data and displays the detected country codes on the display section 30 at step 208.

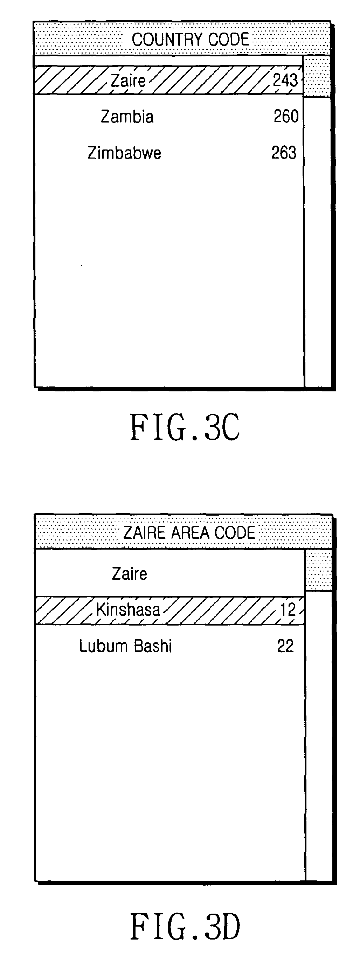

FIG. 3C illustrates the search results displayed according to the user's input of search data. In FIG. 3C, the country names that begin with "Z," as was input as search data in FIG. 2, are displayed together with corresponding country codes. In other words, the control section 10 searches for the country names that begin with "Z" and displays the detected country names and corresponding country codes as search results as illustrated in FIG. 3C.

At step 209, the control section 10 determines whether the user has selected a country name. If a country name has been selected, the control section 10 reads out from the country code storing section 70 the names of cities in the selected country and corresponding area codes and display them on the display section 30 at step 210. FIG. 3D illustrates an example display of city names and corresponding area codes.

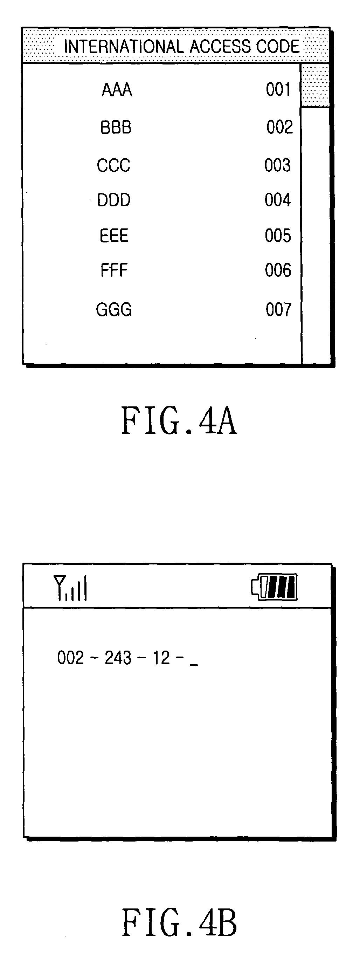

At step 211, the control section determines whether the user has selected an area code. When an area code is selected, the control section 10 displays the names of international telephone service providers and corresponding international access codes at step 213. FIG. 4A illustrates an example display of the names of international telephone service providers and corresponding international access codes.

Upon selection of a country code and an area code, the names of international telephone service providers and corresponding international access codes are displayed to facilitate placing a call from one country to another. The present invention eliminates the need to manually input an international access code in a telephone number input window after searching for a country code and an area code to make an international call.

At step 215, the control section 10 determines whether the user has selected an international telephone service provider (or a corresponding international access code). If the user selects an international access code, the control section generates a telephone number input window and sequentially displays the selected international access code, country code, and area code in the window. The control section 10 then waits for the input of a telephone number.

FIG. 4B illustrates the telephone number input window generated upon completion of a country code search according to the present invention. As illustrated in FIG. 4B, the mobile communication terminal according to the present invention sequentially displays the selected international access code, country code, and area code in the telephone number input window to facilitate making an international call and waits for the input of a telephone number that the user wishes to call. For example, the telephone number can be entered manually by the user or can be selected from a conventional telephone directory.

As described above, the mobile communication terminal stores the country codes and area codes for every country, and the international access codes. This enables a user to search for any country code or area code, and then select an international access code when calling to a foreign country. In addition, upon completion of the selection of a country code, an area code, and an international access code, the mobile communication terminal sequentially displays the selected numbers in the telephone number input window and waits for the input of a telephone number. As a result, the mobile communication terminal according to the present invention, eliminates the need to manually input a country code and an area code detected by the search in the telephone number input window.

While the present invention has been illustrated and described with reference to a certain preferred embodiment thereof, it will be understood by those skilled in the art that various modifications, additions, and substitutions can be made, without departing from the scope of the invention as defined by the appended claims. For example, although a search for a country code and an area code required to make an international call has been explained in the above embodiment, the present invention can also be used to search for an area code to make a long-distance call within the same country. Therefore, the present invention is not to be unduly limited to the embodiment set forth herein, but to be defined by the appended claims.

## Claims

1. A mobile communication terminal comprising:
a country code storing section for storing country codes and area codes for every country, and international access codes; and
a control section for displaying the country codes, the area codes, and the international access codes stored in the country code storing section when a user enters a command for searching for a country code, and generating a telephone number input window for inputting and sequentially displaying an international access code, a country code, and an area code selected by the user.

2. The mobile communication terminal according to claim 1, wherein said country codes and said area codes are input and edited by the user.

3. The mobile communication terminal according to claim 1, wherein said country codes and said area codes are downloaded through a mobile communication network.

4. The mobile communication terminal according to one of claims 1 to 3, wherein said control section generates a country code search window to enable the user to input search data in the window, and displays search results obtained from searching the country code storing section according to the search data.

5. A method for searching for a country code in a mobile communication terminal, comprising the steps of:
storing country codes and area codes for every country, and international access codes, in a country code storing section;
receiving a command for searching for a country code from a user;
displaying the country codes, the area codes, and the international access codes from the country code storing section to enable the user to select a desired country code, area code, and international access code;
generating a telephone number input window;
sequentially displaying the selected international access code, the selected country code, and the selected area code in the telephone number input window.

6. The method according to claim 5, further comprising the step of sequentially entering a telephone number after the selected international access code, the selected country code, and the selected area code in the telephone number input window.

7. The method according to claim 5 or 6, further comprising the step of:
displaying a country code search window;
receiving search data input by the user in the country code search window;
searching the country code storing section according to the search data; and
displaying search results obtained from searching the country code storing section according to the search data.
